# EUROPÄISCHE PATENTSCHRIFT

(11) **EP 1 209 501 B1**
(45) Veröffentlichungstag und Bekanntmachung des Hinweises auf die Patenterteilung: **23.11.2005**
(21) Anmeldenummer: 01118867.9
(22) Anmeldetag: 16.08.2001
(51) Int. Cl.: G02B 7/02, G03F 7/20, G02B 7/00

(54) **Vorrichtung zur Lagerung eines optischen Elementes**
Apparatus for mounting an optical element
Dispositif pour l'assemblage d'un élément optique

(30) Priorität: 18.10.2000 DE 10051706
(43) Veröffentlichungstag der Anmeldung: 29.05.2002
(73) Patentinhaber: Carl Zeiss SMT AG, 73446 Oberkochen (DE)
(72) Erfinder: Becker, Jochen, 73446 Oberkochen (DE); Gellrich, Bernhard, 73434 Aalen (DE); Lang, Werner, 73312 Geislingen (DE); Kohl, Alexander, 73430 Aalen (DE); Kraus, Sascha, 73431 Aalen (DE)
(74) Vertreter: Lorenz, Werner

(56) Entgegenhaltungen:
- DE-A- 19 859 634
- DE-A- 19 905 779
- DE-A- 19 908 554
- DE-A- 19 910 947

## Beschreibung

Die Erfindung betrifft eine Vorrichtung zur Lagerung eines optischen Elementes nach der im Oberbegriff von Anspruch 1 näher definierten Art.

Optische Elemente, wie z.B. Linsen, sind insbesondere in Objektiven für die Halbleiter-Lithographie bezüglich ihrer mechanischen Referenz sehr genau zu montieren und zu justieren. So ist z.B. bei Linsen die optische Achse mit der ideellen mechanischen Achse möglichst genau zur Deckung zu bringen.

In der älteren Anmeldung P 199 08 554.4 der Anmelderin ist eine Dreipunkt-Lagerung über Festkörperdrehgelenke mit Festkörperübergängen bekannt gemäß dem Oberbegriff von Anspruch 1 welche durch Manipulatoren verstellbar sind. Eine Dreipunkt-Lagerung ist auch aus der US-PS 3,917,385 bekannt.

Die DE 199 10 947 A1 beschreibt eine Vorrichtung zum Verschieben eines optischen Elements entlang der optischen Achse, wobei das optische Element in einem Innenring gelagert ist, der über Festkörpergelenke mit einer Außenfassung verbunden ist. An dem Innenring greift eine Verstelleinrichtung mit einem Grobverstellantrieb und einem Feinverstellantrieb an. Die Festkörpergelenke sind dabei so zwischen dem Innenring und der Außenfassung vorgesehen, dass der Innenring bei Betätigung der Verstelleinrichtung entlang der optischen Achse verschoben werden kann.

Des weiteren beschreibt die DE 198 59 634 A1 eine Vorrichtung mit einem Innenring und einem Außenring. Außerdem sind zur Erzeugung von Zug- und/oder Druckkräften an dem deformierbaren Innenring mehrere Aktuatoren vorgesehen, welche an dem Innenring angreifen. Durch gezielt erzeugte Zug- und/oder Druckkräfte kann eine Deformation des optischen Elements derart erzielt werden, dass auftretende Bildfehler durch einen gezielten Astigmatismus kompensiert werden. Um die Zug- und/oder Druckkräfte in Kräfte umzuwandeln, die parallel zur z-Achse wirken und einen Astigmatismus erzeugen, sind vier Winkelhebel, vorgesehen, welche sich zwischen dem Innenring und der Außenfassung befinden.

Der vorliegenden Erfindung liegt die Aufgabe zugrunde, die bisher bekannte Montage- und Justagelagerungstechnik durch eine integrierte feinabstimmende Funktionseinheit zu verbessern, um eine höhere Positioniergenauigkeit zu erreichen.

Erfindungsgemäß wird diese Aufgabe durch die im kennzeichnenden Teil von Anspruch 1 genannten Merkmale gelöst.

Das gefaßte optische Element wird durch die drei am Umfang angeordneten Anbindungsstellen statisch bestimmt gehalten. Durch eine Verstellung an den T-förmigen Übergängen der Festkörpergelenke lässt sich nun die Innenfassung des optischen Elementes am Umfang lokal absenken oder aufstellen. Wenn dabei an allen drei Übergängen die gleiche Kraft und die gleiche Verschiebungsrichtung an den T-Stützen aufgebracht wird, so wird das optische Element entlang seiner optischen Achse (z-Achse) verschoben. Durch unterschiedliche Kräfte bzw. Verschiebungen an den Anbindungen können Kippungen der optische Achse korrigiert bzw. eingestellt werden.

Eine sehr vorteilhafte konstruktive Ausgestaltung zur Lagerung des optischen Elementes kann darin bestehen, daß die Innenfassung, die Außenfassung und die Festkörpergelenke einstückig ausgebildet sind, wobei die Abtrennung durch Trennschnitte erfolgt.

Die Trennschnitte können z.B. im Erodierverfahren hergestellt werden.

Ein sehr vorteilhaftes Anwendungsgebiet für die erfindungsgemä-ße Vorrichtung liegt in Objektiven, in denen optische Elemente in ihrer Einbaulage von der Schwerachse, d.h. von der Vertikalen abweichen. In diesem Fall neigt nämlich das optische Element aufgrund seines Eigengewichtes dazu, insbesondere bei weichen Anbindungen, bezüglich der mechanischen Referenz zu verkippen. Über die erfindungsgemäße Vorrichtung läßt sich dann mittels z.B. von außen montierten bzw. zugänglichen Sensoren die abweichende Lage feststellen und dann das optische Element wieder in seine ursprüngliche Lage zurückstellen.

Bei einer geeigneten Ausbildung bzw. Zugängigkeit der Manipulatoren, welche z.B. hydraulische oder pneumatische Betätigungsglieder aufweisen können, ebenso wie mechanische oder elektrische, kann die erfindungsgemäße Vorrichtung auch aktiv in der optischen Funktionsgruppe benutzt werden, um während des Betriebes auftretende Bildfehler verstellen zu können.

Nachfolgend ist ein Ausführungsbeispiel der Erfindung anhand der Zeichnung prinzipmäßig beschrieben.

Es zeigt:
- Figur 1: eine Prinzipdarstellung der Dreipunkt-Lagerung mit den erfindungsgemäßen Festkörpergelenken in perspektivischer Darstellung;
- Figur 2: ausschnittsweise eine vergrößerte Darstellung eines Festkörpergelenkes in T-Form im Schnitt;
- Figur 3: eine Prinzipdarstellung der Kraftwirkung zur Verstellung; und
- Figur 4: eine Prinzipdarstellung eines optischen Elementes in einer von der Schwerachse abweichenden Einbaulage.

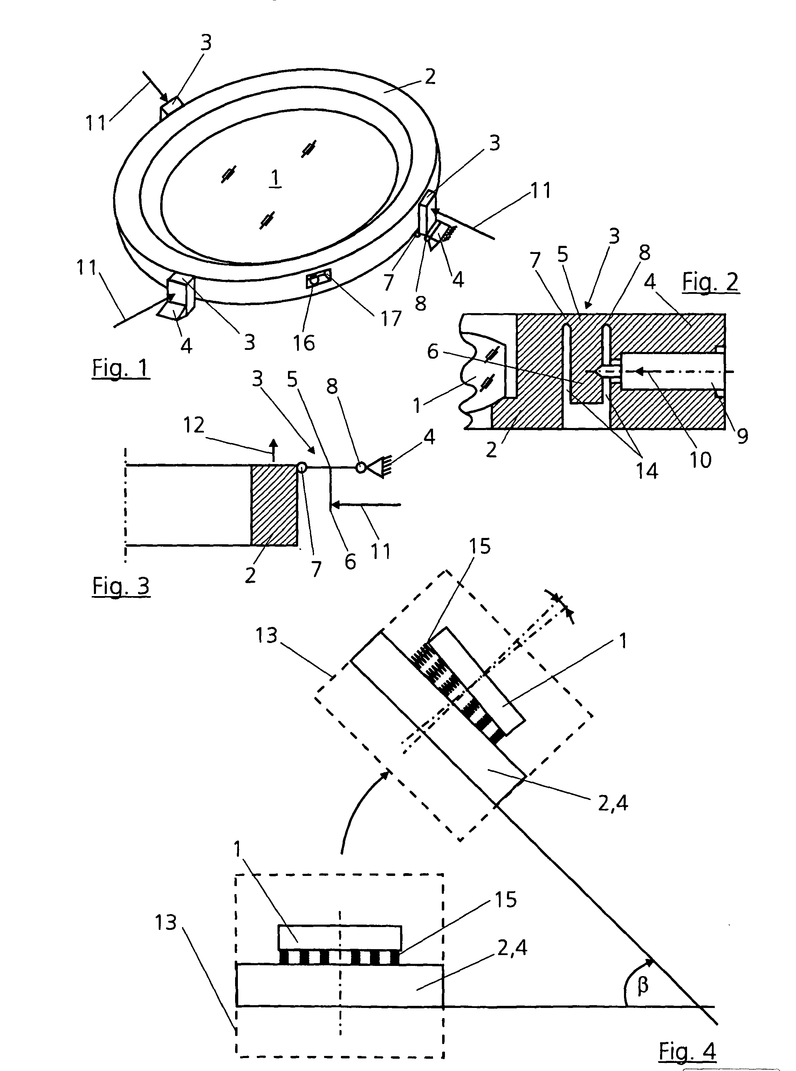

Gemäß Darstellung in den Figuren 1 und 2 ist eine Linse 1 als optisches Element in einer Innenfassung 2 gelagert, welche über drei über den Umfang verteilt angeordnete Festkörpergelenke 3 mit einer Außenfassung 4 verbunden ist. Aus Übersichtlichkeitsgründen ist in der Figur 1 die Außenfassung 4 nur an den Anbindungsstellen angedeutet. Darüber hinaus zeigt die Figur 2 ein Festkörpergelenk in T-Form, wobei sich der T-Träger 5 auf der Oberseite befindet und horizontal verläuft, während die T-Stütze 6 vertikal verläuft. In der Figur 1 hingegen ist die umgekehrte Lage dargestellt. Wie ersichtlich, stellen die Festkörpergelenke 3 nur annähernd bzw. im Prinzip eine T-Form dar, wobei sich Anbindungsstellen 7 und 8 zwischen der Innenfassung 2 und der Außenfassung 4 jeweils an den äußeren Enden des T-Trägers 5 befinden. Im Bereich des unteren Endes jeder T-Stütze 6 greift ein nicht näher dargestellter Manipulator 9 an, der in der Außenfassung 4 gelagert ist. Ein Hebelarm 10 des Manipulators 9 übt dabei Zug- und/oder Druckkräfte auf die T-Stütze 6 aus.

Wie aus der Kraftdarstellung der Figur 3 ersichtlich ist, wirkt sich eine Kraft auf die T-Stütze 6 in Betätigungsrichtung 11 aufgrund der Kinematik der T-Form in eine Verschieberichtung in Pfeilrichtung 12 der Innenfassung 2 aus. Auf diese Weise läßt sich die Innenfassung 2 und damit auch die Linse 1 jeweils lokal an der entsprechenden Anbindungsstelle absenken oder aufstellen, wodurch die Linse 1 bezüglich ihrer optischen Achse entsprechend gekippt wird. Wird an allen drei Festkörpergelenken 3 die gleiche Kraft bzw. Verschiebung aufgebracht, wird die Linse 1 entlang ihrer optischen Achse verschoben.

In der Figur 4 ist in Prinzipdarstellung eine Linse gezeigt, die in ein Objektiv bzw. Objektivteil 13 (nur teilweise gestrichelt dargestellt) eingebaut ist, welches in der Einbaulage bzw. späteren Benutzung von der Schwerachse um den Winkel β abweicht. Die Linse 1 ist auf einer Vielzahl nicht näher dargestellten elastischen Füßchen 15 gelagert und ergibt damit eine weiche Anbindung, woraus eine Verkippung resultiert, wie dies in der oberen Ansicht, nämlich der Schräglage, dargestellt ist. Durch Aktivierung des oder der entsprechenden Manipulatoren 9 läßt sich dann diese Verkippung aufheben bzw. die Linse 1 wieder in ihre ursprüngliche Referenzlage zurückstellen.

Aus der Figur 2 ist auch ersichtlich, daß die Abtrennung zwischen der Innenfassung 2 und der Außenfassung 4 mit den dazwischen liegenden Festkörpergelenken 3 durch Trennschnitte 14 erfolgt ist, so daß die gesamte Vorrichtung einstückig aufgebaut ist.

In der Figur 1 ist lediglich prinzipmäßig dargestellt, wie man z.B. durch einen kapazitiven Sensor 16, der sich in einer Aussparung 17 zwischen der Innenfassung 2 und der Außenfassung 4 befinden kann, Lagebestimmungen vornehmen kann. Hierfür sind selbstverständlich mehrere kapazitive Sensoren 16, entsprechend über den Umfang verteilt angeordnet, erforderlich.

## Patentansprüche

1. Vorrichtung zur Lagerung eines optischen Elementes, mit einer Innenfassung (2) und mit einer Außenfassung (4), insbesondere einer Linse in einem Projektionsobjektiv für die Halbleiter-Lithographie, wobei die Innenfassung (2) mit der Außenfassung (4) über eine Dreipunktlagerung mittels drei über den Umfang verteilt angeordnete Festkörpergelenke (3) verbunden ist, und wobei an den Festkörpergelenken (3) Manipulatoren (9) angreifen, , durch die die Innenfassung (2) entlang der optischen Achse verschiebbar ist, **dadurch gekennzeichnet, dass** die Festkörpergelenke (3) im Querschnitt gesehen wenigstens annähernd eine T-Form aufweisen, wobei sich Anbindungsstellen (7,8) zwischen der Innenfassung (2) und der Außenfassung (4) jeweils im Bereich der äußeren Enden des T-Trägers (5) befinden, und wobei die Manipulatoren (9) jeweils an der T-Stütze (6) angreifen.

2. Vorrichtung nach Anspruch 1, **dadurch gekennzeichnet, dass** die Manipulatoren (9) für die einzelnen Festkörpergelenke (3) jeweils separat betätigbar sind.

3. Vorrichtung nach Anspruch 1 oder 2, **dadurch gekennzeichnet, dass** die Manipulatoren (9) jeweils am unteren Ende der T-Stütze (6) angreifen.

4. Vorrichtung nach einem der Ansprüche 1 bis 3, **dadurch gekennzeichnet, dass** die Innenfassung (2), die Außenfassung (4) und die Festkörpergelenke (3) einstückig ausgebildet sind, wobei die Abtrennung durch Trennschnitte (14) erfolgt.

5. Vorrichtung nach einem der Ansprüche 1 bis 4, **dadurch gekennzeichnet, dass** die Festkörpergelenke (3) mit den Manipulatoren (9) auch zur Korrektur von Eigengewichtsfehlern der optischen Elemente (1) bei einer von der Schwerachse abweichenden Einbaulage vorgesehen sind.

6. Vorrichtung nach einem der Ansprüche 1 bis 5, **dadurch ge** **kennzeichnet, dass** für Lagebestimmungen der Innenfassung (2) Sensoren (16) vorgesehen sind.

7. Vorrichtung nach Anspruch 6, **dadurch gekennzeichnet, dass** die Sensoren als kapazitive Sensoren (16) ausgebildet sind.

8. Vorrichtung nach einem der Ansprüche 1 bis 7, **dadurch gekennzeichnet, dass** als Manipulatoren (9) hydraulische oder pneumatische Betätigungsglieder vorgesehen sind.

9. Vorrichtung nach einem der Ansprüche 1 bis 7, **dadurch gekennzeichnet, dass** als Manipulatoren (9) mechanische Betätigungsglieder vorgesehen sind.

10. Vorrichtung nach einem der Ansprüche 1 bis 7, **dadurch gekennzeichnet, dass** als Manipulatoren (9) elektrische Betätigungsglieder vorgesehen sind.

## Claims

1. An apparatus for mounting an optical element, with an inner cell (2) and with an outer cell (4), in particular a lens in a projection objective for semiconductor lithography, the inner cell (2) being connected to the outer cell (4) via a three-point bearing by means of three solid joints (3) arranged in distributed manner over the periphery, and with manipulators (9) engaging the solid joints (3), by means of which manipulators the inner cell (2) is capable of being displaced along the optical axis, **characterised in that** the solid joints (3), viewed in cross-section, have approximately a T-shape, with linking points (7, 8) being located between the inner cell (2) and the outer cell (4), in each instance in the region of the external ends of the T-bracket (5), and with the manipulators (9) each engaging the T-brace (6).

2. Apparatus according to Claim 1, **characterised in that** the manipulators (9) for the individual solid joints (3) are each capable of being actuated separately.

3. Apparatus according to Claim 1 or 2, **characterised in that** the manipulators (9) each engage the lower end of the T-brace (6).

4. Apparatus according to one of Claims 1 to 3, **characterised in that** the inner cell (2), the outer cell (4) and the solid joints (3) are of integral design, the separation being effected by means of separating cuts (14).

5. Apparatus according to one of Claims 1 to 4, **characterised in that** the solid joints (3) with the manipulators (9) are also provided for the correction of dead-weight errors of the optical elements (1) in the case of a position of installation departing from the centroid axis.

6. Apparatus according to one of Claims 1 to 5, **characterised in that** sensors (16) are provided for determinations of position of the inner cell (2).

7. Apparatus according to Claim 6, **characterised in that** the sensors take the form of capacitive sensors (16).

8. Apparatus according to one of Claims 1 to 7, **characterised in that** hydraulic or pneumatic actuators are provided as manipulators (9).

9. Apparatus according to one of Claims 1 to 7, **characterised in that** mechanical actuators are provided as manipulators (9).

10. Apparatus according to one of Claims 1 to 7, **characterised in that** electric actuators are provided as manipulators (9).

## Revendications

1. Dispositif de logement d'un élément optique, avec une monture interne (2) et avec une monture externe (4), plus particulièrement pour le logement d'une lentille dans un objectif de projection utilisé dans la lithographie des semi-conducteurs, la monture interne (2) étant reliée à la monture interne (4) par l'intermédiaire d'un logement en trois points à l'aide de trois articulations monolithiques (3) réparties sur la circonférence et dans lequel des manipulateurs (9), par l'intermédiaire desquels la monture interne (2) peut être coulissée le long de l'axe optique, sont emboîtés sur les articulations monolithiques (3), **caractérisé en ce que** les articulations monolithiques (3) présentent une section au moins approximativement en forme de T, des points de raccordement (7, 8) se trouvant entre la monture interne (2) et la monture externe (4) au niveau des extrémités externes du support du T (5) et les manipulateurs (9) s'emboîtant sur la colonne du T (6).

2. Dispositif selon la revendication 1, **caractérisé en ce que** les manipulateurs (9) des différentes articulations monolithiques (3) peuvent être actionnés séparément.

3. Dispositif selon la revendication 1 ou 2, **caractérisé en ce que** les manipulateurs (9) s'emboîtent au niveau de l'extrémité inférieure de la colonne du T (6).

4. Dispositif selon l'une des revendications 1 à 3, **caractérisé en ce que** la monture interne (2), la monture externe (4) et les articulations monolithiques (3) sont formées d'une seule pièce, la séparation étant réalisée à l'aide de découpes (14).

5. Dispositif selon l'une des revendications 1 à 4, **caractérisé en ce que** les articulations monolithiques (3) sont également prévues, avec les manipulateurs (9), pour la correction des erreurs dues au poids propre de l'élément optique (1) dans une position d'insertion écartée de l'axe passant par le centre de gravité.

6. Dispositif selon l'une des revendications 1 à 5, **caractérisé en ce que** pour la détermination de la position de la monture interne (2), des capteurs (16) sont prévus.

7. Dispositif selon la revendication 6, **caractérisé en ce que** les capteurs sont conçus comme des capteurs capacitifs (16).

8. Dispositif selon l'une des revendications 1 à 7, **caractérisé en ce que** les manipulateurs (9) sont des organes d'actionnement pneumatiques ou hydrauliques.

9. Dispositif selon l'une des revendications 1 à 7, **caractérisé en ce que** les manipulateurs (9) sont des organes d'actionnement mécaniques.

10. Dispositif selon l'une des revendications 1 à 7, **caractérisé en ce que** les manipulateurs (9) sont des organes d'actionnement électriques.
